# DEMANDE DE BREVET EUROPEEN

(11) **EP 1 239 549 A1**
(43) Date de publication de la demande: **11.09.2002**
(21) Numéro de dépôt: 02290543.4
(22) Date de dépôt: 05.03.2002
(51) Int. Cl.: H01R 13/52

(54) **Connecteur étanche électrique ou optique**

(30) Priorité: 09.03.2001 FR 0103259
(71) Demandeur: FCI, 75009 Paris (FR)
(72) Inventeur: Rouhier, Maurice, 78220 Viroflay (FR)
(74) Mandataire: Somnier, Jean-Louis

(57) **Abrégé**

Un connecteur (10) étanche comporte deux raccords (20a, 20b) séparables aptes à être fixées aux extrémités de deux éléments de câble (90a, 90b), un des deux raccords (20a) possédant au moins un élément de contact (25a) apte à être mis en contact avec un élément de contact (25b) correspondant de l'autre raccord (20b) et permettant d'établir directement la connexion électrique entre les deux raccords (20a, 20b). Selon l'invention, le connecteur (10) comporte un manchon (50) tubulaire possédant, à chacune de ses deux extrémités (53a, 53b), une ouverture par laquelle un raccord (20a, 20b) peut y être introduit et y être mis dans sa position de connexion, des moyens de jonction (70a, 70b) assurant la fixation de chaque raccord (20a, 20b) au manchon (50), et des moyens (30a, 30b) assurant l'étanchéité entre le manchon (50) et chaque raccord (20a, 20b).

## Description

La présente invention concerne les connecteurs étanches électriques ou optiques et, en particulier, ceux aptes à résister à un différentiel de pression.

De manière classique, pour établir une connexion entre deux câbles (électriques ou optiques), on utilise un connecteur comportant deux éléments de contact aptes à établir la connexion, par exemple, une fiche femelle et une fiche mâle

Selon les spécificités liées à l'environnement de la connexion, le connecteur peut comporter divers éléments spécifiques plus ou moins complexes et coûteux.

Ainsi, il existe des connecteurs électriques utilisés pour établir une connexion à travers une paroi de structure pouvant être immergée telle que la coque d'un navire ou d'une structure sous-marine, préservant l'étanchéité de cette coque. Ces connecteurs comportent, outre deux fiches qui peuvent être femelle et ou mâle, deux embases, chacune étant solidaire de manière étanche sur une des faces d'une paroi de la coque et étant adaptée à être connectée à une fiche : ces embases sont connectées électriquement l'une à l'autre par une liaison électrique logée dans un bossage faisant partie de la paroi et laissant en son centre un passage dit de coque permettant ladite liaison; ces embases sont fixées chacune à une extrémité du bossage et reçoivent chacune une des fiches dudit connecteur, chaque fiche pouvant être déconnectable de son embase. Un tel connecteur préservant l'étanchéité de la coque est complexe et coûteux.

Le problème posé est de réaliser un connecteur simple et fiable permettant de réaliser une connexion électrique ou optique à travers la coque de toute structure immergeable, ladite connexion pouvant être démontée d'un côté ou de l'autre tout en préservant l'étanchéité de la coque de la structure et pouvant résister à un différentiel de pression dans un sens ou dans un autre.

De plus, actuellement, quand il est nécessaire de faire passer un câble électrique à travers une ou plusieurs cloisons successives d'une structure dont chaque cloison doit rester étanche, le câble est enfilé à travers des ouvertures réalisées dans chacune des cloisons et est solidaire et rendu étanche par un dispositif de type presse-étoupe: le câble étant ainsi passé en continu sans connexion, car ceux du type utilisé à travers les coques de navires se révélant trop chers, il est nécessaire de remplacer le câble en entier quand il est défectueux et d'en enfiler un nouveau dans chacune des ouvertures, ce qui est long et laborieux.

Aussi, un autre problème posé est de réaliser un connecteur étanche électrique ou optique dont le coût et la simplicité permettront son utilisation, non seulement à travers la coque de toute structure immergée, mais aussi, à travers toute cloison étanche, le connecteur pouvant être démonté d'un côté ou de l'autre tout en préservant l'étanchéité de la cloison.

Il existe aussi des connecteurs électriques étanches utilisés pour la connexion totalement étanche de câbles, il en est ainsi des connexions sous-marines.

On connaît ainsi des connecteurs électriques étanches comportant une fiche femelle possédant au moins une broche femelle et une fiche mâle possédant au moins une broche mâle compatible entre elles et pouvant être connecté directement avec une étanchéité réalisé par l'emboîtement de leur forme complémentaire, comportant un joint d'étanchéité et des moyens externes permettant le maintien de leur emboîtement tel que décrit à titre d'exemple dans le brevet US 5 066 242 du 19 Novembre 1991. De tels connecteurs ne permettent pas cependant de réaliser une connexion électrique étanche à travers la coque de toute structure immergeable.

Du fait de sa simplicité, de sa fiabilité et de son faible coût, le connecteur étanche électrique ou optique selon la présente invention pourra être utilisé non seulement comme connecteur étanche traversant des coques ou des cloisons, mais aussi comme simple connecteur étanche, par exemple, pour relier des câbles électriques ou optiques sous-marins.

Suivant l'invention, le connecteur étanche comporte deux raccords séparables aptes à être fixés aux extrémités de deux éléments de câble, un des deux raccords possédant au moins un élément de contact apte à être mis en contact direct avec un élément de contact correspondant de l'autre raccord et permettant d'établir directement la connexion entre les deux raccords ; ce connecteur est caractérisé en ce qu'il comporte un manchon tubulaire possédant, à chacune de ses deux extrémités, une ouverture par laquelle un raccord peut y être introduit et y être mis dans sa position de connexion, des moyens de jonction assurant la fixation de chaque raccord au manchon dans leur position de connexion, et des moyens assurant l'étanchéité entre le manchon et chaque raccord en position de connexion.

Selon un mode de réalisation préféré, le connecteur ne comporte que deux blocs isolants, chacun de ces blocs étant solidaire de l'extrémité d'un des raccords, les éléments de contact de ceux-ci étant fixés à travers celui-ci, et chaque bloc isolant étant apte à assurer l'étanchéité et la tenue à la différence de pression donnée entre sa face extérieure portant les extrémités de contact des éléments de contact et l'extérieur du raccord qu'il compose quand celui-ci est fixé sur le manchon.

De préférence, les deux raccords et le manchon sont conformés de telle façon que l'introduction, la mise en place et la fixation étanche d'un raccord au manchon est indépendante de l'introduction, la mise en place et la fixation étanche de l'autre raccord au manchon.

Selon un mode de réalisation préféré, chaque moyen assurant l'étanchéité entre le manchon et un raccord comporte au moins une gorge annulaire réalisée sur une région d'une des surfaces latérales soit interne du manchon soit externe du raccord qui sont en contact entre elles quand le raccord est dans sa position de connexion, et un joint d'étanchéité logé dans cette gorge.

Dans le mode de réalisation adapté au connecteur étanche réalisant une connexion à travers une cloison, le connecteur comporte des moyens aptes le solidariser à la cloison et des moyens assurant l'étanchéité entre le manchon et la cloison, le connecteur traversant la cloison et le manchon faisant saillie de chaque côté de cette cloison.

Selon un mode de réalisation préféré, les moyens de solidarisation du connecteur à la cloison sont constitués d'un épaulement s'étendant radialement sur la surface latérale externe du manchon, apte à être mis en butée contre un des côtés de la cloison et à y être solidarisé par des goujons.

Dans le mode de réalisation adapté au connecteur étanche réalisant une connexion à travers une coque immergeable, les moyens de jonction sont aptes à maintenir le bloc isolant de chaque raccord en position de connexion quand une différence de pression règne de part et d'autre de la cloison et que l'autre raccord est hors du manchon, permettant ainsi de maintenir l'étanchéité de part et d'autre de la cloison.

Les connecteurs selon la présente invention présentent l'avantage indéniable d'être simple et d'un coût de fabrication peu élevé tout en étant permettant une connexion totalement étanche, notamment au travers de coques de structures immergeables soumises à d'importantes différences de pression.

De tels connecteurs peuvent être utilisés aussi bien pour réaliser une connexion électrique qu'une connexion optique.

Dans les dessins annexés, donnés à titre d'exemple non limitatifs, et dans la suite de la description, il a été représenté des connecteurs électriques dans lesquels les éléments de contact sont des broches.

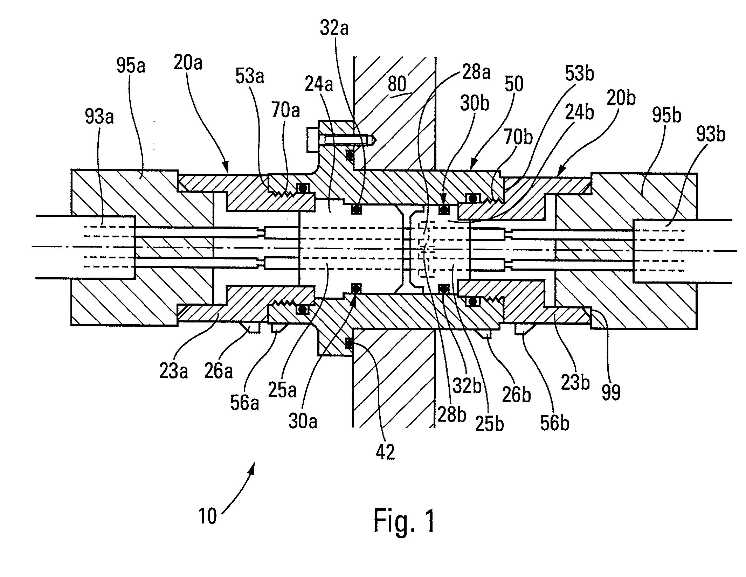

- la figure 1 représente une vue en coupe d'un connecteur particulièrement adapté à la traversée de cloison étanche ;

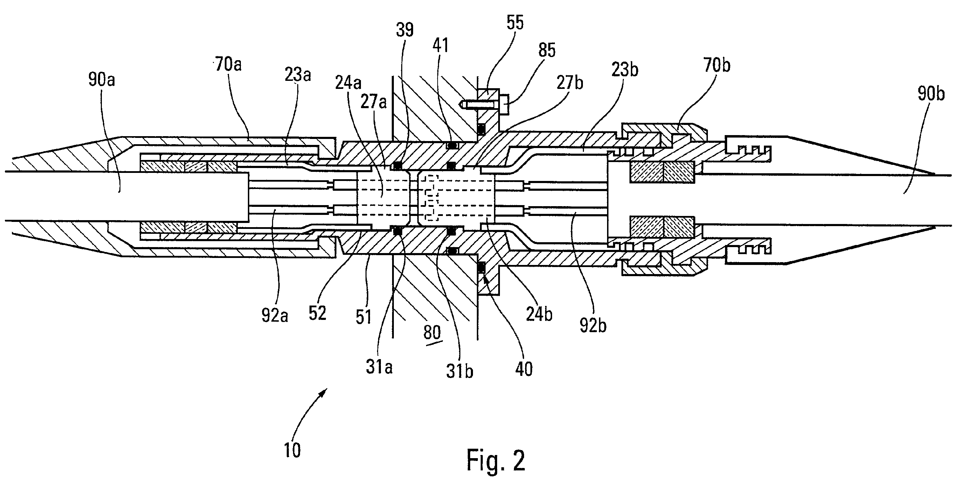

- la figure 2 représente une vue en coupe d'un connecteur particulièrement adapté à la traversée de coque immergeable.

Selon le mode de réalisation de la présente invention correspondant aux figures annexées, le connecteur 10 comporte deux raccords 20a, 20b et un manchon 50.

De manière classique, chaque raccord 20a, 20b est relié, par une première extrémité, à l'extrémité d'un câble électrique 90a, 90b et peut, par sa deuxième extrémité, se connecter électriquement à l'autre raccord 20b, 20a de manière à établir une connexion électrique entre les deux câbles 90a, 90b.

Chaque raccord 20a, 20b comprend un boîtier 23a, 23b, et, à son extrémité apte à réaliser la connexion électrique avec l'autre raccord 20b, 20a, un bloc isolant 24a, 24b relié par des moyens connus au boîtier 23a, 23b.

A l'intérieur de chaque bloc isolant 24a, 24b est logé au moins une broche 25a, 25b conductrice d'électricité faisant office d'élément de contact. Les broches 25a, 25b de chaque raccord 20a, 20b sont conformées de façon à ce que chaque broche mâle 25a, 25b, d'un raccord 20a, 20b peut être insérée dans la broche femelle 25a, 25b correspondante de l'autre raccord 20b, 20a de manière à établir la connexion électrique entre les deux raccords 20a, 20b.

Chaque broche mâle 25a, 25b fait saillie, par son extrémité de connexion 28a, 28b, hors du bloc isolant 24a, 24b hors du raccord 20a, 20b, de manière à pouvoir être insérée dans la broche femelle 25a, 25b correspondante de l'autre raccord 20b, 20a.

De plus, chaque broche 25a, 25b fait saillie, par son extrémité opposée à l'extrémité de connexion 28a, 28b, hors du bloc isolant 24a, 24b dans le boîtier 23a, 23b, de façon à pouvoir être reliée facilement au fil 92a, 92b conducteur d'électricité du câble 90a, 90b.

Chaque raccord 20a, 20b est connecté à l'extrémité d'un câble électrique 90a, 90b comprenant une gaine isolante 93a, 93b à l'intérieure de la quelle sont logés les fils 92a, 92b.

De manière classique, le câble 90a, 90b est relié mécaniquement et électriquement au raccord 20a, 20b par des moyens de connexion mécanique 95a, 95b, le fil 92a, 92b étant connecté électriquement à la partie de la broche 25a, 25b située dans le boîtier 23a, 23b. L'étanchéité de cette connexion mécanique est par exemple réalisée par des joints étanches 99 logés entre le raccord 20a, 20b et ces moyens de connexion mécanique 95a, 95b.

Le manchon 50 a la forme générale d'un tube creux possédant une surface latérale externe 51, une surface latérale interne 52 et, à chacune de ses deux extrémités 53a, 53b, une ouverture.

Les deux raccords 20a, 20b et le manchon 50 sont conformés de telle façon que chaque raccord 20a, 20b puisse être introduit dans le manchon 50 par une ouverture, indépendamment l'un de l'autre.

La connexion électrique entre les deux raccords 20a, 20b se fait à l'intérieur du manchon 50 par l'introduction de la (des) broche(s) mâle(s) 25a, 25b d'un raccord 20a, 20b dans la (les) broche(s) femelle(s) 25a, 25b de l'autre raccord 20b, 20a.

De manière avantageuse, chaque raccord 20, 20b possède des moyens de butée 27a, 27b aptes à limiter leur introduction à l'intérieur du manchon 50 et à définir leur position de connexion électrique selon laquelle chaque broche mâle 25a, 25b d'un raccord 20a, 20b est apte à être insérée dans la broche femelle 25a, 25b correspondante de l'autre raccord 20b, 20a.

Plus particulièrement, des moyens de butées 27a, 27b peuvent être réalisés sur les blocs isolant 24a, 24b, notamment par des rebords annulaires 27a, 27b.

De manière avantageuse, afin de permettre à l'utilisateur de positionner correctement chaque broche femelle 25a, 25b en face de la broche mâle 25a, 25b avec laquelle elle doit être connectée, les deux raccords 20a, 20b et les deux extrémités 53a, 53b du manchon 50 possèdent des repères angulaires 26a, 26b, 56a, 56b.

Ces repères angulaires 26a, 26b, 56a, 56b sont disposés de telle sorte que les deux raccords 20a, 20b sont correctement positionnés l'un par rapport à l'autre quand, pour chaque raccord 20a, 20b, le repère 26a, 26b du raccord 20a, 20b est en vis à vis du repère 56a, 56b de l'extrémité 53a, 53b où se trouve l'ouverture à partir de laquelle le raccord 20a, 20b a été introduit dans le manchon 50.

Il est notamment possible d'utiliser un outil pour introduire chaque raccord 20a, 20b dans le manchon 50.

Cet outil a la forme d'un demi cylindre creux pouvant être engagé au moins partiellement dans le manchon 50, le raccord 20a, 20b étant placé dans la cuvette formée par le demi cylindre.

L'outil possède, de plus, un manche solidaire du demi cylindre, l'utilisateur utilisant ce manche pour manipuler l'outil.

De façon avantageuse, ce manche peut être utilisé comme repère angulaire coopérant avec le repère angulaire 56a, 56b situé à l'extrémité 53a, 53b du côté du manchon 50 par où le raccord 20a, 20b est introduit, l'outil possédant un autre repère angulaire au niveau du demi cylindre coopérant avec le repère angulaire 26a, 26b situé sur le raccord 20a, 20b pour placer correctement le raccord 20a, 20b dans l'outil.

Le connecteur 10 possède des moyens de jonction 70a, 70b permettant de relier mécaniquement et de fixer chaque raccord 20a, 20b, indépendamment l'un de l'autre, au manchon 50 dans sa position de connexion électrique.

Ces moyens de jonction 70a, 70b peuvent être par exemple un système de vissage du boîtier 23a, 23b au manchon 50.

Afin d'assurer l'étanchéité de part et d'autre du manchon 50 et de réaliser ainsi un connecteur électrique 10 parfaitement étanche, le connecteur 10 comprend des moyens d'étanchéité 30a, 30b entre le manchon 50 et chacun des deux raccords 20a, 20b. De cette façon, une fois les deux raccords 20a, 20b connectés l'un à l'autre dans le manchon 50, chaque ouverture du manchon est obturée de façon parfaitement étanche, aucun échange pouvant se faire entre le milieu extérieur au manchon 50 et la région délimitée par le manchon 50 et les deux raccords 20a, 20b où les broches 25a, 25b se connectent.

Chacun de ces moyens d'étanchéité 30a, 30b peut, par exemple, consister en une gorge 31a, 31b, 32a, 32b réalisée sur toute la circonférence d'une partie d'une surface latérale du connecteur 10, et en un joint d'étanchéité 39 logé dans cette gorge 31a, 31b, 32a, 32b.

Ainsi, pour assurer l'étanchéité entre le manchon 50 et un raccord 20a, 20b, une gorge 31a, 31b peut être réalisée dans la partie de la surface latérale interne 52 du manchon 50 qui est en contact avec le raccord 20a, 20b quand celui-ci est dans sa position de connexion électrique.

De manière alternative ou complémentaire, pour assurer l'étanchéité entre le manchon 50 et un raccord 20a, 20b, une gorge 32a, 32b peut être réalisée dans la partie de la surface latérale du raccord 20a, 20b qui est en contact avec la surface latérale interne 52 du manchon 50 quand le raccord 20a, 20b est dans sa position de connexion électrique.

L'étanchéité est notamment réalisée par la mise en place des blocs isolants 24a, 24b dans le manchon 50.

Grâce à un tel connecteur 10, l'étanchéité de la connexion électrique par rapport au milieu extérieur est assurée étant donné que chaque raccord 20a, 20b, indépendamment l'un de l'autre, est relié de manière étanche au manchon 50.

Selon un mode de réalisation préféré particulièrement adapté à la connexion électrique à travers une cloison 80, le manchon 50 possède des moyens 55 aptes à le solidariser à la cloison 80 après avoir été introduit à l'intérieur d'une ouverture réalisée à travers cette cloison 80.

Ces moyens de solidarisation 55 peuvent être, par exemple, un épaulement 55 s'étendant radialement de la surface latérale externe 51 du manchon 50. La solidarisation du manchon 50 à la cloison 80 peut être réalisée par des goujons 85 traversant de part en part l'épaulement 55 du manchon 50 et pénétrant dans la cloison 80 contre laquelle l'épaulement 55 est en butée.

Afin de réaliser une connexion électrique à travers une cloison 80 séparant deux espaces de façon totalement étanche sans affecter cette étanchéité, le connecteur 10 est muni, outre les moyens d'étanchéité 30a, 30b entre le manchon 50 et chacun des deux raccords 20a, 20b, de moyens d'étanchéité 40 entre la cloison 80 et le manchon 50.

Chacun de ces moyens d'étanchéité 40, peut, par exemple, consister en une gorge 41 réalisée sur toute la circonférence d'une partie d'une surface du manchon 50, et en un joint d'étanchéité 49 logé dans cette gorge 41.

Ainsi, pour assurer l'étanchéité entre la cloison 80 et le manchon 50, une gorge 41 peut être réalisée dans la partie de la surface latérale externe 51 du manchon 50 qui est en contact avec la cloison 80 quand le manchon 50 y est solidarisé.

De manière alternative ou complémentaire, une gorge 42 peut être réalisée dans la partie de la surface de l'épaulement 55 du manchon 50 qui est en contact avec la cloison 80 quand le manchon 50 y est solidarisé.

Grâce à un tel connecteur 10, l'étanchéité est assurée, même si un seul des deux raccords 20a, 20b est introduit dans le manchon 50 : les moyens d'étanchéité 40 entre le manchon 50 et la cloison 80 et les moyens d'étanchéité 30a, 30b entre le manchon 50 et le raccord 20a, 20b qui y est introduit permettent d'assurer une étanchéité totale entre les deux espaces séparés par la cloison 80.

Selon un mode de réalisation préféré particulièrement adapté à la connexion électrique à travers une cloison 80 dont les deux parois sont soumises à des pressions différentes, le manchon 50 est de préférence introduit du coté appelé à avoir la pression est la plus forte. De ce fait, une fois le manchon 50 solidarisé à la cloison 80, l'épaulement 55 est en butée contre la paroi soumise à la pression la plus élevée, ce qui augmente l'étanchéité entre la cloison 80 et le manchon 50.

De plus, quand les parois de la cloison 80 sont soumises à des pressions différentes, les moyens de jonction 70a, 70b assurent la jonction étanche du raccord 20a, 20b au manchon 50 malgré la différence de pression subie par le connecteur 10.

Ces moyens de jonction 70a, 70b utilisés pour maintenir l'étanchéité de part et d'autre de la cloison 80 exercent sur le bloc isolant 24a, 24b de chaque raccord 20a, 20b une contre-pression telle que le bloc isolant 24a, 24b résiste à la différence de pression régnant de part et d'autre de la cloison 80 quand l'autre raccord 20b, 20a est hors du manchon 50.

Ces moyens de jonction 70a, 70b permettent de maintenir la fixation étanche du seul raccord 20a, 20b en position de connexion électrique, que le raccord déconnecté se trouve du côté de la cloison 80 où règne la pression la plus élevée ou non.

Ces moyens de jonction 70a, 70b peuvent consister en des bagues filetées 70a, 70b vissées au manchon 50, venant en butée contre le boîtier 23a, 23b et réalisant ainsi la contre-pression sur le bloc isolant 24a, 24b logé à l'extrémité du boîtier 23a, 23b.

Les moyens de jonction 70a, 70b peuvent aussi consister ainsi en plusieurs pièces coopérant entre elles et avec le manchon 50 et le raccord 20a, 20b qu'ils maintiennent à ce manchon 50

Grâce à ce connecteur 10, l'étanchéité de part et d'autre de la coque est assurée, même si un seul des deux raccords 20a, 20b est introduit dans le manchon 50, que le seul raccord 20a, 20b introduit dans le manchon 50 soit situé du côté de la coque où la pression est la plus forte ou du côté où elle est la plus faible.

Il peut donc être utilisée dans les sous-marins pour établir les connexions électriques au travers de la coque, l'étanchéité étant maintenue quand la fiche située à l'extérieur du submersible est hors du manchon.

Il peut être utilisé aussi pour traverser la coque de toute structure immergée.

Dans le mode de réalisation décrit ci-dessus en détail en accord avec les figures annexées, les éléments de contact sont constitués par des couples broches femelles - broches mâles. Il est évident, que d'autres types d'éléments de contact peuvent être utilisés pour établir la connexion électrique, notamment des éléments habituellement utilisés pour la connexion électrique par contact.

Il est tout aussi évident que le connecteur selon la présente invention peut être utilisé pour établir une connexion optique étanche. Dans une telle application, il est évident que chaque raccord est relié, par une première extrémité, à l'extrémité d'un câble optique et peut, par sa deuxième extrémité, se connecter optiquement à l'autre raccord de manière à établir une connexion optique entre les deux câbles.

Grâce à sa simplicité et à son faible coût de fabrication, le connecteur selon la présente invention peut être utilisé pour tout type de connexion étanche à travers une cloison, que la connexion soit électrique ou optique.

## Revendications

1. Connecteur (10) étanche comportant deux raccords (20a, 20b) séparables aptes à être fixés aux extrémités de deux éléments de câble (90a, 90b), un des deux raccords (20a) possédant au moins un élément de contact (25a) apte à être mis en contact direct avec un élément de contact (25b) correspondant de l'autre raccord (20b) et permettant d'établir directement la connexion entre les deux raccords (20a, 20b), **caractérisé en ce qu'**il comporte un manchon (50) tubulaire possédant, à chacune de ses deux extrémités (53a, 53b), une ouverture par laquelle un raccord (20a, 20b) peut y être introduit et y être mis dans sa position de connexion, des moyens de jonction (70a, 70b) assurant la fixation de chaque raccord (20a, 20b) au manchon (50) dans leur position de connexion, et des moyens (30a, 30b) assurant l'étanchéité entre le manchon (50) et chaque raccord (20a, 20b) en position de connexion.

2. Connecteur (10) étanche selon la revendication 1, **caractérisé en ce qu'**il ne comporte que deux blocs isolants (24a, 24b), chacun de ces blocs (24a, 24b) étant solidaire de l'extrémité d'un des raccords (20a, 20b), les éléments de contact (25a, 25b) de ceux-ci étant fixés à travers celui-ci, et chaque bloc isolant (24a, 24b) étant apte à assurer l'étanchéité et la tenue à la différence de pression donnée entre sa face extérieure portant les extrémités de contact (28a, 28b) des éléments de contact (25a, 25b) et l'extérieur du raccord (20a, 20b) qu'il compose quand celui-ci est fixé sur le manchon (50).

3. Connecteur (10) étanche selon la revendication 1 ou 2, **caractérisé en ce que** les deux raccords (20a, 20b) et le manchon (50) sont conformés de telle façon que l'introduction, la mise en place et la fixation étanche d'un raccord (20a, 20b) au manchon (50) est indépendante de l'introduction, la mise en place et la fixation étanche de l'autre raccord (20b, 20a) au manchon (50).

4. Connecteur (10) étanche selon l'une des revendications 1 à 3, **caractérisé en ce que** chaque moyen (30a, 30b) assurant l'étanchéité entre le manchon (50) et un raccord (20a, 20b) comporte au moins une gorge (31a, 31b) annulaire réalisée sur une région d'une des surfaces latérales soit interne (52) du manchon (50) soit externe du raccord (20a, 20b) qui sont en contact entre elles quand le raccord (20a, 20b) est dans sa position de connexion, et un joint d'étanchéité (39) logé dans cette gorge (31a, 31b).

5. Connecteur (10) étanche selon l'une des revendications 1 à 4, **caractérisé en ce qu'**il comporte des moyens (55) aptes à le solidariser à une cloison (80) et des moyens (40) aptes à assurer l'étanchéité entre le manchon (50) et la cloison (80), le connecteur (10) traversant la cloison (80) et le manchon (50) faisant saillie de chaque côté de cette cloison (80).

6. Connecteur (10) étanche selon la revendication 5, **caractérisé en ce que** les moyens (55) de solidarisation du connecteur (10) à la cloison (80) sont constitués d'un épaulement (55) s'étendant radialement sur la surface latérale externe (51) du manchon (80), apte à être mis en butée contre un des côtés de la cloison (80) et à y être solidarisé par des goujons (85).

7. Connecteur (10) étanche selon l'une quelconque des revendications 5 à 6, **caractérisé en ce que** les moyens de jonction (70a, 70b) sont aptes à maintenir le bloc isolant (24a, 24b) de chaque raccord (20a, 20b) en position de connexion quand une différence de pression règne de part et d'autre de la cloison (80) et que l'autre raccord (20b, 20a) est hors du manchon (50), permettant ainsi de maintenir l'étanchéité de part et d'autre de la cloison (80).

8. Connecteur (10) étanche selon l'une des revendications 1 à 7, **caractérisé en ce que** les raccords (20a, 20b) et les deux extrémités (53a, 53b) du manchon (50) possèdent des repères angulaires (26a, 26b, 56a, 56b) aptes à permettre à l'utilisateur de positionner correctement chaque élément de contact (25a) d'un raccord (20a) en face de l'élément de contact correspondant (25b) de l'autre raccord (20b).

9. Connecteur (10) étanche selon l'une des revendications 1 à 8, **caractérisé en ce qu'**il est apte à établir la connexion électrique entre deux câbles électriques (90a, 90b), les éléments de contacts (25a, 25b) pouvant être des couples de broches mâles (25a, 25b) et femelles (25a, 25b).

10. Connecteur (10) étanche selon l'une des revendications 1 à 8, **caractérisé en ce qu'**il est apte à établir la connexion optique entre deux câbles optiques (90a, 90b).
